**Europäisches Patentamt**

**European Patent Office**

**Office européen des brevets**

(11) Veröffentlichungsnummer: **0 083 091**
**A2**

## EUROPÄISCHE PATENTANMELDUNG

(21) Anmeldenummer: 82111977.3

(22) Anmeldetag: 23.12.82

(51) Int. Cl.³: **C 23 C 1/00**
**C 23 C 7/00**

(30) Priorität: 24.12.81 DE 3151390

(43) Veröffentlichungstag der Anmeldung:
06.07.83 Patentblatt 83/27

(84) Benannte Vertragsstaaten:
DE FR GB IT

(71) Anmelder: Linn, Horst
Heinrich-Hertz-Platz 1
D-8459 Hirschbach-1(DE)

(72) Erfinder: Linn, Horst
Heinrich-Hertz-Platz 1
D-8459 Hirschbach-1(DE)

(74) Vertreter: LOUIS, PÖHLAU, LOHRENTZ & SEGETH
Kesslerplatz 1
D-8500 Nürnberg(DE)

(54) Verfahren und Vorrichtung zum Beschichten von Formteilen mit schmelzflüssigem Metall.

(57) Es wird ein Verfahren zum Beschichten von Formteilen mit geschmolzenem Metall vorgeschlagen, wobei die zu beschichtende Oberfläche auf eine hinreichende Temperatur erhitzt und anschliessend das Metall direkt aufgetropft wird. Die Erhitzung erfolgt vorzugsweise induktiv. Zur Unterstützung einer gleichmässigen Verteilung kann das Formteil während des Auftropfens bewegt werden. Weiterhin wird eine Vorrichtung zur Durchführung des Verfahrens angegeben, welche einen Vorschubmechanismus (36) für den Metallstab (5), ein Schutzrohr (8) um den Metallstab (5), eine ausserhalb des Schutzrohres (8) angeordnete Induktionsspule (10), eine äussere Abschirmung (14) für die Induktionsspule (10) sowie einen Träger für das Formteil (1) aufweist, wobei im Bereich des Formteiles (1) eine Beheizungseinrichtung (2) vorgesehen ist.

Fig 1

- 1 -

Verfahren und Vorrichtung zum Beschichten von
Formteilen mit schmelzflüssigem Metall
------------------------------------------------------------

Die Erfindung betrifft ein Verfahren zum Beschichten
von Formteilen mit Metall unter Schmelzen des Metalles. Ausserdem hat sie eine Vorrichtung zur Durchführung des Verfahrens zum Gegenstand.

Es ist sehr häufig erwünscht, einen Formkörper, z.B.
aus relativ weichem Metall, Metall-Keramik oder Keramik, mit einem harten Metall zu beschichten. Dies
erfolgt z.B. bei der Herstellung von Führungsbahnen
bei Werkzeugmaschinen, sowie zur Erzeugung entsprechend verschleissfester Lager- und Sitzflächen,
z. B. für Ventile. Die Beschichtung erfolgt mit
Hartmetallen, Stelliten oder anderen Lagerwerkstoffen. Bei einer solchen Beschichtung ist es erforderlich, dass man eine möglichst gleichmässige Hartmetall-Schicht auf der entsprechenden Oberfläche des
Formteiles erzeugt. Dabei darf die Metallschicht
nicht durch oxidierte oder in sonstiger Weise verschmutzte Stellen gestört sein, weil an solchen Stellen dann die angestrebte Wirkung nicht mehr erreicht werden könne.

Der Erfindung liegt nun die Aufgabe zugrunde, ein Verfahren und eine zur Durchführung des Verfahrens geeignete Vorrichtung vorzuschlagen, welche es gestatten, in einfacher Weise eine Oberfläche eines Formteiles mit einem schmelzbaren Werkstoff, insbesondere Metall, zu beschichten, wobei sich eine gleichmässige Schicht einwandfreier Beschaffenheit erzielen lässt.

Bei einem Verfahren zum Beschichten von Formteilen mit Metall unter Schmelzen des Metalles - wobei dieses Verfahren grundsätzlich auch auf andere schmelzbare Werkstoffe anwendbar ist -, wird erfindungsgemäss nun vorgeschlagen, dass die zu beschichtende Oberfläche des Formteiles auf eine ein Anhaften des Metalles in geschmolzenem Zustand begünstigende Tempertur erhitzt und anschliessend das Metall in Form von Tropfen aufgebracht wird, wobei die Tropfen direkt von ihrer Entstehungsstelle am unteren Ende eines aus dem aufzubringenden Metall bestehenden Festkörpers auf die zu beschichtende Oberfläche aufgetropft werden.

Bei dem Verfahren nach der Erfindung ist somit wesentlich, dass die Aufbringung des Beschichtungswerkstoffes in gleichmässiger Tropfenform erfolgt, ohne dass das zur Beschichtung dienende Metall zwischen Schmelzen und Auftreffen auf die zu beschichtende Oberfläche mit einem anderen Werkstoff in Berührung käme.

Durch das Auftropfen erreicht man eine gleichmässige
Verteilung des Metalles in relativ dünnen Schichten.
Da das geschmolzene Metall nicht mit anderen Werkstoffen in Berührung kommt, besteht auch nur in geringem Masse die Gefahr von Verunreinigungen. Die
tropfenweise Aufbringung des Metalles auf die Oberfläche des Formteiles erlaubt weiter eine vergleichsweise genaue Dosierung, wobei die Zahl der Tropfen des
Metalles, die auf das Formteil aufgebracht werden, in
Abhängigkeit von der gewünschten Schichtdicke und der
Grösse der zu beschichtenden Oberfläche gewählt werden kann. Die Erwärmung des Formteiles bzw. dessen zu
beschichtender Oberfläche kann in einer üblichen Weise, beispielsweise mit Hilfe von Gasbrennern oder Widerstandsheizungen, erfolgen, sofern nur Gewähr dafür
getragen ist, dass bei der Erwärmung die Oberfläche
des Formteiles nicht derart verändert wird, dass das
Beschichtungsmaterial nicht mehr auf ihr haftet. Dies
kann aber im allgemeinen schon dadurch verhindert werden, dass die Oberfläche bis zum Auftropfen des Beschichtungsmetalles auf der Maximaltemperatur gehalten wird, d.h. eine Abkühlung erst nach Beschichtung
erfolgt. Auch eine schrittweise Abkühlung unter Schutzgas wäre zur Vermeidung von Spannungsrissbildung und
Oxidation denkbar.

Besonders günstig ist es, wenn erfindungsgemäss der
Festkörper zum Schmelzen unter Tropfenbildung induktiv erhitzt wird, weil dann kaum eine Gefahr einer
Verzunderung oder sonstigen Veränderung des Festkörpers während des Erhitzens besteht.

Es kann weiter zweckmässig sein, wenn der Festkörper periodisch erhitzt wird, um so die jeweils abgegebene Metallmenge steuern zu können, insbesondere zu erreichen, dass auf das jeweils vorhandene Formteil nur eine bestimmte Anzahl von Tropfen abgetropft wird, wodurch das Gewicht des aufgebrachten Materials bestimmt wird.

Als günstig hat sich herausgestellt, wenn der Festkörper in einer ersten, oberen Zone auf eine unter seinem Schmelzpunkt liegende Temperatur und in einer zweiten, unteren Zone bis zum Schmelzen unter Bildung von Tropfen erhitzt wird. Ein derartiges Vorgehen gestattet eine besonders feine Dosierung der Menge des abgetropften Metalles, da zum Abtropfen jeweils nur noch eine vergleichsweise geringfügige Temperaturerhöhung erforderlich ist, die sich mit geringer Heizleistung, z.B. einer Induktionsspule, erreichen lässt.

Ist der Festkörper zumindest in dem Bereich mit Schutzgas umspült, der zur Bildung der Tropfen bis zum Schmelzen erhitzt wird, kann die Gefahr einer Beeinträchtigung der Qualität der von den Metalltropfen gebildeten Oberfläche des Formteiles weiter vermindert werden. Bei Verwendung einer induktiven Beheizung und hinreichendem Schutzgasstrom kann man im allgemeinen davon ausgehen, dass z.B. keine Oxidation des Metalles erfolgt.

Der Festkörper, der zur Erzeugung der Tropfen des Metalles dient, kann grundsätzlich die unterschiedlichsten Gestalten haben. Zweckmässigerweise wird jedoch als Festkörper ein Stab verwendet, welcher abhängig von der abgetropften Metallmenge kontinuierlich oder periodisch in Richtung auf die zu beschichtende Oberfläche des Formteiles abgesenkt wird, wodurch sich erreichen lässt, dass der Abstand zwischen unterem Ende des Stabes und der zu beschichtenden Oberfläche im wesentlichen gleich bleibt, so dass die Aufprallenergie der Tropfen stets dieselbe ist und somit eine gleichmässige Verteilung des abgetropften Metalles über die zu beschichtende Oberfläche erfolgt. Üblicherweise sind allerdings die aufgebrachten Metallschichten vergleichsweise dünn (z.B. 0,1 bis 5 mm), so dass der Metallstab während des Beschichtens eines Formteiles in ein und derselben Position verbleiben kann und erst dann, wenn ein weiteres Formteil beschichtet werden soll, ein kleines Stück abgesenkt wird. Insofern kann die Absenkung des Metallstabes abhängig von der Bewegung eines Trägers für das Formteil erfolgen.

Eine besonders gleichmässige Beschichtung lässt sich dann erreichen, wenn das Formteil beim Auftropfen des Metalles, vorzugsweise rotierend, in der Ebene der zu beschichtenden Oberfläche bewegt wird, weil bei einer derartigen Bewegung die Verteilung des Metalles auf der Oberfläche des Formteiles begünstigt wird.

Eine Vorrichtung zur Durchführung des oben erläuterten Verfahrens bei induktiver Beheizung eines Metallstabes als Festköprer zeichnet sich gemäss der Erfindung aus durch einen Vorschubmechanismus für den etwa vertikal, d.h. mit einem Winkel von weniger als 30 ° gegenüber der Vertikalen, angeordneten Metallstab, durch ein den Metallstab umgebendes, mit Schutzgas durchspülbares Schutzrohr, durch eine etwa konzentrisch zu dem Metallstab ausserhalb um das Schutzrohr angeordnete Induktionsspule, durch eine äussere Abschirmung für die Induktionsspule, welche entweder mit Schutzgas durchspülbar oder innenseitig mit einer Isolierung der Induktionsspule versehen ist, sowie durch einen unterhalb des Schutzrohres und der Induktionsspule angeordneten Träger für das Formteil mit der zu beschichtenden Oberfläche, in dessen Bereich eine Beheizungseinrichtung für das Formteil vorgesehen ist.

Die Vorrichtung nach der Erfindung ist verhältnismässig einfach aufgebaut und umfasst nur wenige Teile. Sie kann insbesondere mit geringen Abmessungen hergestellt und z.B. dann, wenn eine vorhandene Drehteller-Einrichtung als Träger für das Formteil eingesetzt wird, ohne Schwierigkeiten an eine solche Drehteller-Einrichtung als Zusatz angebaut werden.

Um die Möglichkeit zu bieten, die Dauer und Stärke der Beheizung des Metallstabes, der zur Beschichtung des Formteiles geschmolzen wird, den jeweiligen Erfordernissen anpassen zu können, umfasst die Induktionsspule vorteilhafterweise zwei Teile unterschiedlichen Durchmessers, deren Abstand voneinander veränderlich ist, wobei der untere Teil den kleineren Durchmesser aufweist und zum Schmelzen des Metallstabes dient.

Wenn die Induktionsspule, die von einem konstanten Strom durchflossen ist, in ihrem oberen Teil einen grösseren Durchmesser besitzt, so wird dort der Metallstab schwächer erwärmt als in dem unteren Teil mit geringerem Durchmesser. Auf diese Weise lässt sich lediglich durch Wahl der entsprechenden Spulen-Geometrie eine zweistufige Beheizung des Metallstabes erreichen, nämlich im oberen Teil der Spule bis zu einer unter dem Schmelzpunkt liegenden Temperatur, im unteren Teil der Spule bis zu einer zum Schmelzen unter Tropfenbildung ausreichenden Temperatur. Dabei spielt auch der Abstand zwischen dem Spulenteil mit grösserem und kleinerem Durchmesser eine Rolle, weil dieser Abstand eine gewisse Verweilposition für den Stab (bei erhöhter, jedoch noch nicht zum Schmelzen ausreichender Temperatur) bestimmt. Je nach Abmessungen des Stabes und verarbeitetem Material kann der Abstand der beiden Spulenteile der Induktionsspule voneinander verändert werden. Es wäre auch denkbar, die Auswechslung der Induktionsspulen vorzusehen, um eine Anpassung an unterschiedliche, verarbeitete Materialien zu erreichen. Im allgemeinen wird es jedoch genügen, lediglich die Speisung der Induktionsspule, d.h. die Frequenz des die Spule durchfliessenden Stromes und dessen Stärke, zu verändern.

Wichtig ist, dass die Induktionsspule in einem Abschirm-System untergebracht ist, welches einen entsprechenden mechanischen und thermischen Schutz für die Spule gewährleistet. Zu einem solchen Abschirm-System gehört zum einen das innere Schutzrohr, welches den Metallstab direkt umgibt. Dieses Schutzrohr besteht aus Quarz, Keramik oder einem entsprechenden, temperaturbeständigen Isoliermaterial und gestattet die Durchfuhr von Schutzgas zum Schutz des Metallstabes während des Erhitzens und Schmelzens. Die Isolierung der Induktionsspule selbst kann derart erfolgen, dass sie ebenfalls in einer Abschirmung aus isolierendem Material angeordnet ist, welches dann mit Schutzgas durchspült werden kann. Eine andere Möglichkeit besteht darin, die Induktionsspule in einer Keramikmasse einzubetten, was aber den Nachteil hätte, dass die gesamte Vorrichtung schwer wird und ein Auswechseln der Induktionsspule sowie eine Veränderung des Abstandes der einzelnen Spulenteile auf Schwierigkeiten stösst. Auf jeden Fall muss Sorge dafür getragen werden, dass die Potentialverhältnisse im Bereich der Induktionsspule derart sind, dass ein Funkenüberschlag von der Induktionsspule zu anderen Teilen der Vorrichtung, insbesondere dem Träger für das Formteil oder zu dem Formteil selbst, verhindert wird. Dies lässt sich nun in besonders einfacher Weise dadurch erreichen, dass die äussere Abschirmung für die Induktionsspule aus Metall besteht und mit dem unteren Ende der Induktionsspule leitend verbunden ist. Auf diese Weise erreicht man, dass das untere Ende der Induktionsspule, von dem aus ja Funken überschlagen könnten, sich auf gleichem Potential wie die Abschirmung und somit wie die gesamte Maschine befindet. In einem derartigen Falle muss nur eine entsprechende Insolierung zwischen Abschirmung für die Induktionsspule und der Induktionsspule selbst vorhanden sein.

Die Speisung der Induktionsspule erfolgt erfindungsgemäss mittels eines im Frequenzbereich von 2 kHz bis 10 MHz arbeitenden, über einen Ausgangstransformator mit der Induktionsspule verbundenen Hochfrequenzgenerators, welcher abhängig von der gewünschten Erhitzungszeit und -dauer taktweise einschaltbar ist. Die Einschaltdauer des getakteten Hochfrequenzgenerators hängt davon ab, welche Energie erforderlich ist, um das Metall des Stabes zur Tropfenbildung zu schmelzen. Ausserdem bestimmt die Einschaltdauer auch die Zahl der in einem Arbeitsgang freigegebenen Metalltropfen, d.h. auch die Dicke der auf dem Formteil erzeugten Metallschicht. Der Einschaltzeitpunkt des Hochfrequenzgenerators hängt von der Position und Temperatur des Formteiles ab, da ja ein Abtropfen des Metalles erst nach hinreichender Erwärmung des Formteiles und nur dann erfolgen soll, wenn sich das Formteil genau unterhalb des Metallstabes befindet.

Um ein kontinuierliches Arbeiten zu ermöglichen, ohne dass nach einem Beschichtungsvorgang jeweils ein ausreichendes Abkühlen des Formteiles abgewartet werden müsste, weist die Vorrichtung nach der Erfindung vorzugsweise einen Träger, z.B. einen Drehteller oder Linearvorschub, auf, auf dem mehrere zu beschichtende Formteile gemeinsam und schrittweise bewegbar angeordnet sind und mittels dessen die Formteile in verschiedene Stationen, nämlich mindestens eine Beheizungsstation, mindestens eine Abkühlstation und die Abtropfstation unter dem Metallstab, bewegbar sind.

Schliesslich liegt es im Rahmen der Erfindung, dass abhängig von der Position des bewegbaren Trägers der Vorschubmechanismus für den Metallstab und/oder eine Energiequelle für die Induktionsspule bzw. die Beheizung der Formteile und/oder eine Einrichtung zur Bewegung der Formteile während des Abtropfens ansteuerbar sind. Der Träger gibt also gleichsam Taktsignale für die anderen Teile der Vorrichtung, insbesondere z.B. den Hochfrequenzgenerator, den Vorschubmechanismus für den Metallstab und einen Antrieb für die Formteile während des Beschichtens, z.B. einen Motor, der die Teile dann entsprechend dreht.

Weitere Einzelheiten und Vorteile der Erfindung ergeben sich aus der folgenden Beschreibung bevorzugter Ausführungsbeispiele entsprechender Vorrichtungen anhand der Zeichnung.

Es zeigen:

Figur 1    die für das Abtropfen wesentlichen Teile einer ersten Ausführungsform einer Vorrichtung nach der Erfindung bei Verwendung eines Metallstabes im Vertikalschnitt,

Figur 2    einen Vertikalschnitt durch die Teile entsprechend Figur 1 bei einer zweiten Ausführungsform einer Vorrichtung,

Figur 3    schematisch eine Gesamt-Anlage zur Beschichtung der Sitzflächen von rotationssymmetrischen Teilen
und

Figur 4      ein Blockschema zu der Anlage der Figur 3.

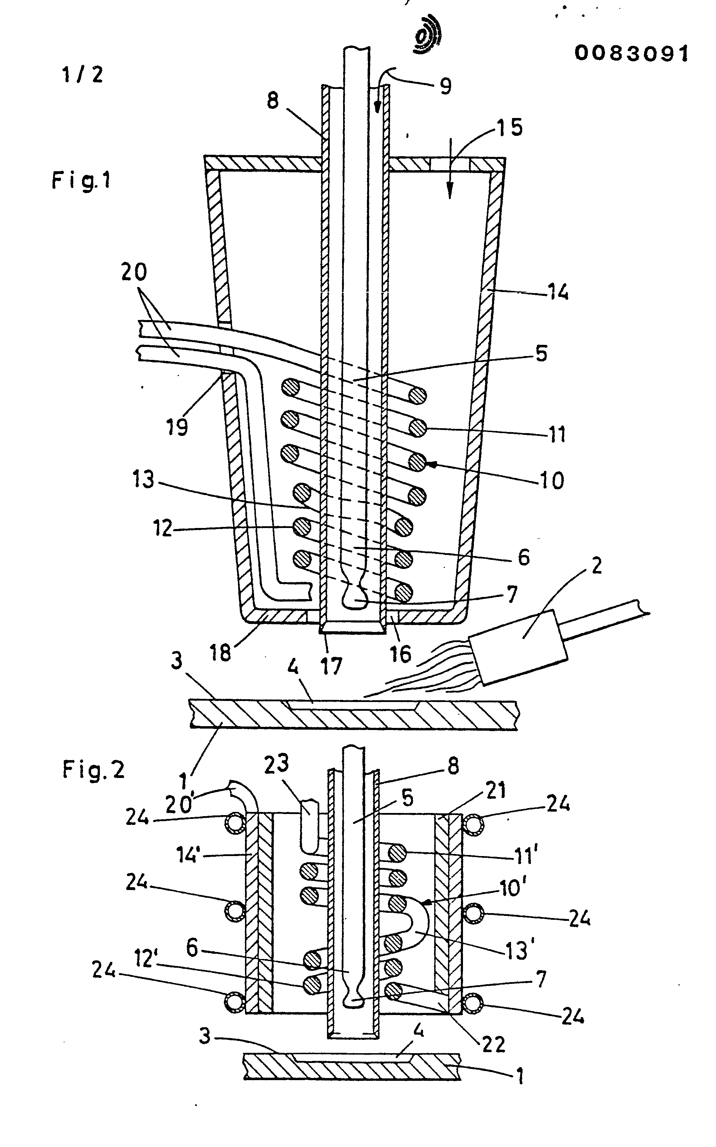

Wie bereits oben erwähnt, sind in den Figuren 1 und 2 jeweils nur die Teile einer entsprechenden Vorrichtung gezeigt, die der unmittelbaren Beschichtung eines Formteiles mit im vorliegenden Falle flüssigem Metall dienen. Die Erfindung wird überwiegend nur zur Aufbringung von Metall in flüssiger Form auf Formteile eingesetzt werden. Es wäre jedoch auch denkbar, in entsprechender Weise vorzugehen, wenn andere, schmelzbare Werkstoffe auf ein Formteil als Beschichtung aufgebracht werden sollen.

Bei der Vorrichtung gemäss Figur 1 ist ein Formteil 1 vorgesehen, welches beispielsweise mittels eines Gasbrenners 2 auf eine hinreichend hohe Temperatur, z.B. den Schwitzpunkt, wenn es sich um ein Formteil 1 aus Metall handelt, erhitzt werden kann. Das Formteil 1 ist an der zu beschichtenden Oberfläche 3 mit einer Nut 4 versehen, in welche das als Beschichtung dienende Material, im vorliegenden Falle hartes Metall, eingebracht werden soll.

Das in die Nut 4 einzubringende Metall stammt von einem Metallstab 5, von dessen unterem Ende 6 jeweils entsprechende Tropfen 7 direkt auf die zu beschichtende Oberfläche 3, im vorliegenden Falle in den Bereich der Nut 4, fallen. In den Figuren 1 und 2 sind die Tropfen 7 jeweils kurz vor ihrer Ablösung vom unteren Ende 6 des Metallstabes 5 gezeigt.

Der Metallstab 5 ist jeweils innerhalb eines Schutzrohres 8 aus isolierendem Werkstoff, beispielsweise Quarz oder Keramik, angeordnet, durch welches, wie durch den Pfeil 9 in Figur 1 angedeutet, Schutzgas geleitet werden kann.

Ausserhalb des Schutzrohres 8, jedoch etwa konzentrisch hierzu, ist eine Induktionsspule 10 angeordnet, die, wie Figur 1 deutlich erkennen lässt, aus zwei Teilen 11, 12 unterschiedlicher Geometrie besteht. Der obere Teil 11 der Induktionsspule hat einen etwas grösseren Durchmesser als der untere Teil 12. Ausserdem umfasst bei dem Ausführungsbeispiel gemäss Figur 1 der obere Teil 11 der Induktionsspule 10 eine grössere Windungszahl als der untere Teil 12. Der Abstand der beiden Teile 11, 12 der Induktionsspule 10 kann mittels in der Zeichnung nicht dargestellter Einrichtungen verändert werden. Hierzu muss wenigstens der Abschnitt 13 der Induktionsspule 10 leicht beweglich sein. Es wäre allerdings auch denkbar, dass die Induktionsspule 10 zwar zwei unterschiedliche Abschnitte 11, 12 aufweist, deren Abstand voneinander jedoch nicht veränderlich ist. In einem solchen Falle müsste, wenn ein anderer Metallstab 5 geschmolzen werden soll, die Induktionsspule 10 insgesamt durch eine solche anderer Geometrie ersetzt werden.

Die Induktionsspule 10 wiederum ist innerhalb einer becherförmigen Abschirmung 14 angeordnet, welche bei der Ausführungsform gemäss Figur 1 ebenfalls, wie durch den Pfeil 15 angedeutet, von Schutzgas durchströmt werden kann, das dann durch den Spalt 16 zwischen dem unteren Ende 17 des Schutzrohres 8 und dem Boden 18 der Abschirmung 14 austreten kann. Eine derartige Führung des Schutzgasstromes, nämlich einerseits durch das Schutzrohr 8 (Pfeil 9) und andererseits durch die Abschirmung 14 mit Austritt durch den Spalt 16 bringt den Vorteil mit sich, dass gleichzeitig auch die zu beschichtende Oberfläche 3, insbesondere im Bereich der Nut 4, des Formteiles 1 mit Schutzgas überspült wird.

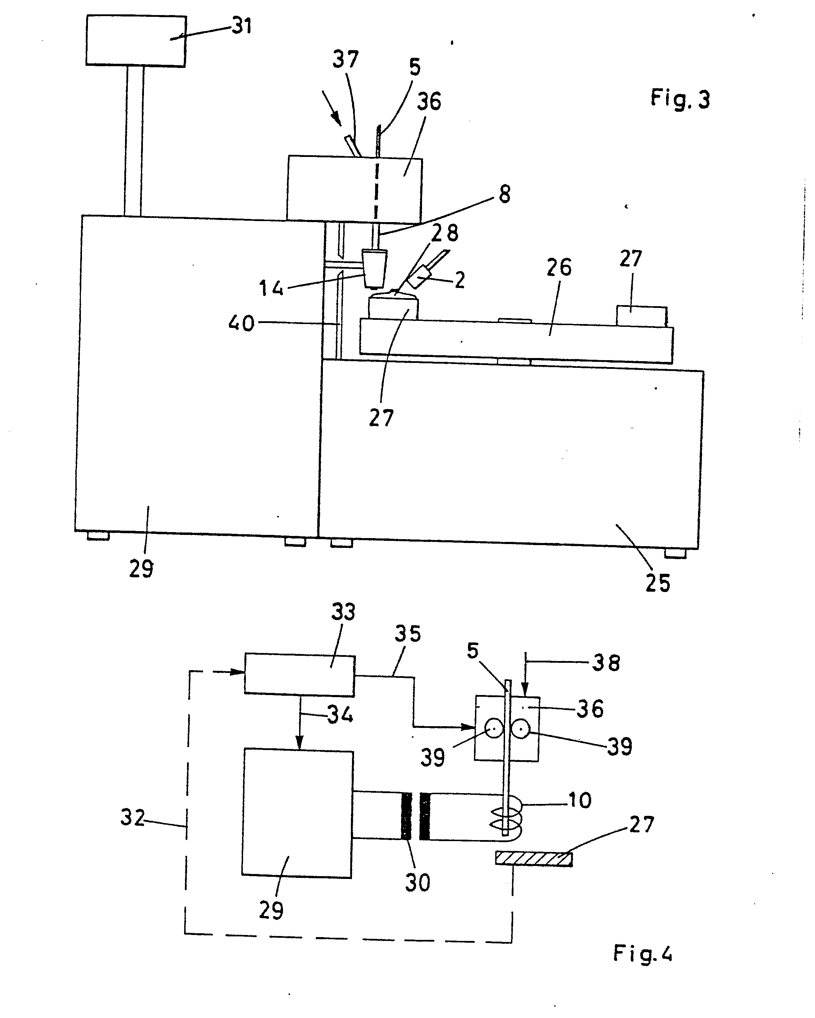

Die Abschirmung 14 hat in ihrer Seitenwand eine Durchbrechung 19 zum Durchtritt der Anschlussenden 20 für die Induktionsspule 10, die im allgemeinen zu einem Hochfrequenzgenerator (Figur 3, 4) führen.

Abstelle der Umspülung der Induktionsspule 10 mit Schutzgas innerhalb der Abschirmung 14 wäre es auch möglich, die Induktionsspule 10 in ein entsprechendes Isoliermaterial, z.B. eine Keramikmasse, einzubetten, um so die Induktionsspule gegen mechanische und thermische Beanspruchung zu schützen.

Es sei an dieser Stelle nochmals darauf hingewiesen, dass die Geometrie der Induktionsspule 10 zur Anpassung an den zu schmelzenden Metallstab 5 geändert werden kann. Dabei sind folgende Grössen veränderlich: der Durchmesser der beiden Teile 11, 12 der Induktionsspule 10, der Durchmesser des Drahtes bzw. Rohres, aus dem die Induktionsspule gewickelt ist, der Abstand der Teile 11 und 12 der Induktionsspule 10, wobei prinzipiell auch die beiden Teile 11, 12 der Induktionsspule 10 aus Material unterschiedlichen Durchmessers bestehen können.

- 14 -

Die Vorrichtung gemäss Figur 2 stimmt prinzipiell mit der der Figur 1 überein. Es ist allerdings so, dass die beiden Teile 11', 12' der Induktionsspule 10' nicht nur unterschiedlichen Durchmesser haben sondern zudem entgegengesetzte Steigung, weshalb der Verbindungsabschnitt 13' auch in anderer Weise verläuft als bei der Ausführungsform der Figur 1.

Der wesentliche Unterschied der Vorrichtung der Figur 2 von der der Figur 1 ist in der Ausbildung der Abschirmung 14' zu sehen. Diese ist nämlich bei der Vorrichtung nach Figur 2 von einem Rohr aus metallischem Werkstoff gebildet, während die Abschirmung 14 nach Figur 1 aus einem isolierenden Werkstoff, z.B. Quarz oder Keramik, besteht. Die Abschirmung 14' bei der Ausführungsform der Figur 2 kann beispielsweise aus Kupfer hergestellt sein.

Innerhalb der Abschirmung 14' ist eine Isolierung 21, z.B. aus einem geeigneten Kunststoff, angeordnet. Der Raum innerhalb der Isolierung 21, in dem die Induktionsspule 10' angeordnet ist, muss nicht mit Schutzgas durchspült werden. Lediglich das Schutzrohr 8 wird entsprechend Figur 1 von oben nach unten mit Schutzgas durchspült.

Um nun trotzdem zu gewährleisten, dass keine Funkenüberschläge eintreten, die die Qualität der Beschichtung auf dem Formteil 1 beeinträchtigen könnten, wird dafür Sorge getragen, dass die Induktionsspule 10' sich an ihrem unteren Ende auf dem gleichen Potential befindet wie die Abschirmung 14', was in einfacher Weise dadurch geschehen kann, dass das untere Ende 22 des unteren Teiles 12' der Induktionsspule 10' leitend mit der Abschirmung 14' verbunden wird. Die Abschirmung 14' dient somit als Anschluss für die Induktionsspule 10', wobei die Isolierung 21 Überschläge im Bereich des oberen Endes 23 der Induktionsspule 10' verhindert.

Zum Anschluss der Induktionsspule 10' gemäss Figur 2 dient einerseits ein Anschlussende 20', welches mit der Abschirmung 14' leitend verbunden ist, und andererseits das entsprechend verlängerte obere Ende 23.

Nachdem die Abschrimung 14' von Strom durchflossen ist, besteht die Gefahr, dass sie sich verhältnismässig stark erwärmt. Aus diesem Grunde laufen aussen um die Abschirmung 14' herum von Wasser durchflossene Rohre 24 zur Kühlung.

In den Figuren 3 und 4 ist schematisch eine Gesamtanlage für das Beschichten von Formteilen, beispielsweise für Ventilteller von Ventilen für Kraftfahrzeug-Verbrennungsmotoren, veranschaulicht.

Die Anlage der Figur 3 umfasst einen Ständer 25, der einen Drehteller 26 trägt, welcher mit einer Vielzahl von Trägern 27 für die zu beschichtenden Formteile, im vorliegenden Falle rotationssymmetrischen Teilen 28, versehen ist. Der Drehteller 26 ist mittels eines nicht gezeigten, in dem Ständer untergebrachten Antriebs taktweise drehbar. Dabei können die Träger 27 wenigstens in drei Stationen gebracht werden, nämlich mindestens eine Beheizungsstation, mindestens eine Abkühlstation sowie die in
Figur 3, links, sowie in den Figuren 1 und 2 gezeigte Abtropfstation, wo das Metall in Tropfenform auf
das zu beschichtende Formteil 1, 28 fällt.

Die Anlage umfasst weiterhin einen Hochfrequenzgenerator 29 zur Speisung der Induktionsspule 10, 10',
welcher vorzugsweise in einem Frequenzbereich von
2 kHz bis 10 MHz arbeitet und über einen Ausgangstransformator 30 mit der Induktionsspule 10 verbunden ist (Figur 4). Der Hochfrequenzgenerator 29 kann,
worin ebenfalls eine Besonderheit des Erfindungsgegenstandes zu sehen ist, taktweise betrieben werden, wobei die Arbeitsbedingungen z.B. über ein Schaltpult 31
vorgegeben werden können, allerdings jeweils nur in
Abhängigkeit von entsprechenden Prozess-Signalen, wie
dies in Figur 4 durch die gestrichelte Linie 32 angedeutet ist, welche von einem schematisch gezeigten
Träger 27 zu einem Taktgeber 33 führt, der einerseits
über eine Leitung 34 den Hochfrequenzgenerator 29 ansteuert, andererseits über eine Leitung 35 die Ansteuerung eines Vorschubmechanismus 36 für den abzutropfenden Metallstab 5 ansteuert.

Bei der Anlage gemäss Figur 3 sind noch ein Gasbrenner
2 zur Vorwärmung des Formteiles 28 sowie eine Zuleitung 37 für Schutzgas gezeigt, wobei die Schutzgas-
Zuführung in Figur 4 durch den Pfeil 38 angedeutet
werden soll.

Der Vorschubmechanismus für den Stab 5 kann in beliebiger Weise ausgebildet werden. Der Einfachheit halber wird in Figur 4 davon ausgegangen, dass der Stab 5 zwischen zwei Räder 39 eingeklemmt wird, die sich zum Vorschub des Stabes 5 in Richtung auf den Träger 27 bzw. das zu beschichtende Formteil entsprechend drehen.

Zum Schutz des Hochfrequenzgenerators 29 kann bei der Anlage schliesslich noch ein Hitzeschild 40 vorgesehen sein.

Die Ausbildung der Abtropfstation bei der Anlage der Figur 3 entspricht der in den Figuren 1 und 2 gezeigten Vorrichtung. Schliesslich bietet die Anlage der Figur 3 noch die Möglichkeit, die Träger 27 und damit die Formteile 28 in Bewegung zu versetzen, und zwar derart, dass sie sich etwa in der Ebene der zu beschichtenden Oberfläche 3 bewegen. Hierbei kommt sowohl eine lineare Hin- und Herbewegung als auch eine Rotationsbewegung in Frage, und zwar abhängig von der Form der zu bechichtenden Formteile. Bei Beschichtung von Formteilen 28, wie sie in Figur 3 angedeutet ist, wird man die Träger 27 in Drehung versetzen, um auf diese Weise eine gleichmässige Verteilung des aufzubringenden Metalles über die zu beschichtende Oberfläche 3 zu erreichen.

Mit der Anlage gemäss Figur 3 bzw. den Vorrichtungen der Figuren 1 und 2 wird nun wie folgt gearbeitet:

Die Träger 27 auf dem Drehteller 26 der Anlage der Figur 3 werden jeweils mit einem zu beschichtenden Formteil bestückt. Hieran anschliessend wird dann der Drehteller 26 gedreht, wodurch die Träger 27 mit den Formteilen 28 in eine oder mehrere Beheizungsstationen bewegt werden, wo die zu beschichtende Oberfläche 3 der Formteile 1, 28 auf eine passende Temperatur vorgewärmt wird.

In einem weiteren Schritt bewegt der Drehteller 26 dann den Träger 27 mit dem Formteil 1, beispielsweise dem Ventilteller 28, in die Abtropfstation, die entsprechend den Figuren 1 oder 2 ausgebildet ist. In der Abtropfstation wird das Formteil 1, 28 z.B. mittels des Gasbrenners 2 weiterhin beheizt, um seine Temperatur weitgehend konstant zu halten.

Gleichzeitig erfolgt dann aber auch eine entsprechende Beheizung des Metallstabes 5 mittels der Induktionsspule 10, 10', und zwar so lange, bis die erforderliche Anzahl von Tropfen 7 von dem Metallstab 5 abgetropft und auf die zu beschichtende Oberfläche 3 gefallen ist. Während dieses Abtropfens bewegt sich der Träger 27, beispielsweise drehend.

Sobald die erforderliche Anzahl von Tropfen auf die zu beschichtende Oberfläche 3 gelangt ist, führt der Drehteller 26 einen weiteren Schritt aus. Dadurch gelangt der soeben beschichtete Formteil in eine erste Abkühlstation. Gleichzeitig wird ein neuer, zu beschichtender Formteil in die Abtropfstation bewegt. In der Abkühlstation kann noch eine geringfügige Beheizung des Formteiles 1 erfolgen, um auf diese Weise eine besonders innige Verbindung des aufgetropften Metalles mit der zu beschichtenden Oberfläche zu erreichen. Es wäre aber auch möglich, lediglich eine Abkühlung vorzunehmen. Bei Weiterbewegung des Drehtellers 26 gelangt dann der Träger 27 mit dem beschichteten Formteil 28 in eine Station, in der das Formteil entnommen und ein neues Formteil eingesetzt werden kann, worauf der Kreislauf von Neuem beginnt.

Besonders wesentlich ist die Art der Erwärmung des Metallstabes 5 mittels der Induktionsspule 10. Infolge des unterschiedlichen Durchmessers der beiden Teile 11, 12 bzw. 11', 12' der Induktionsspule 10, 10' wird das untere Ende 6 des Metallstabes 5 stärker erhitzt als der weiter oben, innerhalb des oberen Teiles 11, 11' der Induktionsspule 10, 10' liegende Teil. Dabei wird der Strom durch die Induktionsspule und dessen Frequenz zweckmässig so gewählt, dass das untere Ende 6 des Metallstabes 5 bis über den Schmelzpunkt erhitzt wird, während der weiter oben gelegene Bereich nur bis zu einer Temperatur unterhalb des Schmelzpunktes erwärmt wird.

Wesentlich ist auch, dass die Beheizung des Metallstabes 5 nicht dauernd sondern nur in Abhängigkeit von dem jeweiligen Prozess-Zustand erfolgt. Es darf beispielsweise keine zu starke Erwärmung dann erfolgen, wenn sich gerade kein Formteil 1 in der Abtropfstation befindet oder noch eine gewisse Erwärmung des Formteiles erforderlich ist. Um dies zu erreichen, erhält der Taktgenerator 33 entsprechende Signale über die Leitung 32, beispielsweise Signale über die Position der Träger 27. Ausserdem kann über das Schaltpult 31 die Arbeitsdauer des Hochfrequenzgenerators 29 sowie das von diesem erzeugte Signal eingestellt werden. Der Taktgeber 33 steuert im übrigen auch den Vorschubmechanismus 36 für den Metallstab 5 derart, dass der Abstand des unteren Endes 6 des Metallstabes 5 von der zu beschichtenden Oberfläche 3 des Formteils 1 stets möglichst gleich bleibt, um auf diese Weise eine besonders gleichmässige Ausbildung der auf die Oberfläche 3 aufzubringenden Schicht aus flüssigem Metall zu erreichen. Die Bewegungen des Vorschubmechanismus können auch von der Taktung des Hochfrequenzgenerators sowie dessen Leistungsniveau abhängen. Beispielsweise kann der Hochfrequenzgenerator zwei Positionen umfassen, nämlich eine Position "Wärmen" und eine Position "Tropfen", wobei in der Position "Wärmen" eine geringere Leistung als in der Position "Tropfen" abgegeben wird. Die jeweilige Leistung und die Zeit, während der der Hochfrequenzgenerator in dem entsprechenden Zustand arbeitet, hängt davon ab, welche Menge abgetropft werden soll, welche Abmessungen der zu schmelzende Stab hat, welche Materialeigenschaften der Stab besitzt und schliesslich welche Abmessungen und Vorwärmtemperatur das zu beschichtende Formteil aufweist.

Mit dem Verfahren und der Vorrichtung nach der Erfindung können insbesondere verhältnismässig dünne Metallschichten von z.B. 0,1 bis 5 mm aus harten Metallen auf weiche Metalle oder sonstige Werkstoffe aufgetragen werden. Die weichen Metalle bzw. der Werkstoff, aus dem das Formteil besteht, sollen dabei, um eine gute Verbindung mit dem aufgetropften harten Metall zu erzielen, mit der Flamme oder induktiv, zweckmässig unter Schutzgas, bis zu einer prozesstypischen Temperatur vorgewärmt werden, z.B. dem Schwitzpunkt bei Formteilen aus Metall. Bei entsprechender Vorwärmung und passender Wahl der Tropfbedingungen für das aufzubringende Metall (Tropfengrösse, Tropfenzahl, Abtropftemperatur) lässt sich eine sehr gute Beschichtung erreichen, wobei sich das aufgetropfte Metall ähnlich wie Lot gleichmässig an der zu beschichtenden Oberfläche verteilt. Diese Verteilung kann durch eine entsprechende Bewegung des Formteiles, d.h. des Trägers 27, noch unterstützt werden.

- 1 -

Patentansprüche
-----------------

1. Verfahren zum Beschichten von Formteilen mit
   Metall unter Schmelzen des Metalles,
   dadurch gekennzeichnet,
   dass die zu beschichtende Oberfläche des Formteiles auf eine ein Anhaften des Metalles in
   geschmolzenem Zustand begünstigende Temperatur
   erhitzt und anschliessend das Metall in Form
   von Tropfen aufgebracht wird, wobei die Tropfen direkt von ihrer Entstehungsstelle am unteren Ende eines aus dem aufzubringenden Metall bestehenden Festkörpers auf die zu beschichtende Oberfläche aufgetropft werden.

2. Verfahren nach Anspruch 1,
   dadurch gekennzeichnet,
   dass der Festkörper zum Schmelzen unter Tropfenbildung induktiv erhitzt wird.

3.  Verfahren nach Anspruch 1 oder 2,
    dadurch gekennzeichnet,
    dass der Festkörper periodisch erhitzt wird.

4.  Verfahren nach einem der vorhergehenden Ansprüche, dadurch gekennzeichnet,
    dass der Festkörper in einer ersten, oberen
    Zone auf eine unter seinem Schmelzpunkt liegende Temperatur und in einer zweiten, unteren Zone bis zum Schmelzen unter Bildung von
    Tropfen erhitzt wird.

5.  Verfahren nach einem der vorhergehenden Ansprüche, dadurch gekennzeichnet, dass der
    Festkörper zumindest in dem Bereich mit
    Schutzgas umspült wird, der zur Bildung der
    Tropfen bis zum Schmelzen erhitzt wird.

6.  Verfahren nach einem der vorhergehenden Ansprüche, dadurch gekennzeichnet,
    dass als Festkörper ein Stab verwendet wird,
    welcher abhängig von der abgetropften Metallmenge kontinuierlich oder periodisch in Richtung auf die zu beschichtende Oberfläche des
    Formteiles abgesenkt wird.

7.  Verfahren nach einem der vorhergehenden Ansprüche, dadurch gekennzeichnet,
    dass das Formteil beim Auftropfen des Metalles, vorzugsweise rotierend, in der Ebene der
    zu beschichtenden Oberfläche bewegt wird.

8. Vorrichtung zur Durchführung des Verfahrens nach einem der vorhergehenden Ansprüche bei induktiver Beheizung eines Metallstabes (5) als Festkörper, gekennzeichnet durch einen Vorschubmechanismus (36) für den etwa vertikal angeordneten Metallstab (5), durch ein den Metallstab (5) umgebendes, mit Schutzgas durchspülbares Schutzrohr (8), durch eine etwa konzentrisch zu dem Metallstab (5) ausserhalb um das Schutzrohr (8) angeordnete Induktionsspule (10, 10'), durch eine äussere Abschirmung (14, 14') für die Induktionsspule (10, 10'), welche entweder mit Schutzgas durchspülbar oder innenseitig mit einer Isolierung (21) der Induktionsspule (10, 10') versehen ist, sowie durch einen unterhalb des Schutzrohres (8) und der Induktionsspule (10, 10') angeordneten Träger (27) für das Formteil (1) mit der zu beschichtenden Oberfläche (3), in dessen Bereich eine Beheizungseinrichtung (2) für das Formteil (1) vorgesehen ist.

9. Vorrichtung nach Anspruch 8, dadurch gekennzeichnet, dass die Induktionsspule (10, 10') zwei Teile (11, 11'; 12, 12') unterschiedlichen Durchmessers umfasst, deren Abstand voneinander veränderlich ist, wobei der untere Teil (12, 12') den kleineren Durchmesser aufweist und zum Schmelzen des Metallstabes (5) dient.

10. Vorrichtung nach Anspruch 8 oder 9,
dadurch gekennzeichnet,
dass die äussere Abschirmung (14') für die Induktionsspule (10') aus Metall besteht und mit dem unteren Ende (22) der Induktionsspule (10') leitend verbunden ist.

11. Vorrichtung nach einem der Ansprüche 8 bis 10,
dadurch gekennzeichnet,
dass zur Speisung der Induktionsspule (10, 10') ein im Frequenzbereich von 2 kHz bis 10 MHz arbeitender, über einen Ausgangstransformator (30) mit der Induktionsspule (10, 10') verbundener Hochfrequenzgenerator (29) dient, welcher abhängig von der gewünschten Erhitzungszeit und -dauer taktweise einschaltbar ist.

12. Vorrichtung nach einem der Ansprüche 8 bis 11,
dadurch gekennzeichnet,
dass mehrere zu beschichtende Formteile (1, 28) auf einem gemeinsamen, schrittweise bewegbaren Träger, z.B. einem Drehteller (26) angeordnet sind, mittels dessen die Formteile (1, 28) in verschiedene Stationen, nämlich mindestens eine Beheizungsstation, mindestens eine Abkühlstation und die Abtropfstation unter dem Metallstab (5) bewegbar sind.

13. Vorrichtung nach Anspruch 12,
dadurch gekennzeichnet,
dass abhängig von der Position des bewegbaren Trägers (26) der Vorschubmechanismus (36) für den Metallstab (5) und/oder eine Energiequelle (29) für die Induktionsspule (10, 10') bzw. die Beheizung der Formteile (1, 28) und/oder eine Einrichtung zur Bewegung der Formteile (1, 28) während des Abtropfens ansteuerbar sind.

0083091

Fig.1

Fig.2

Fig. 3

Fig. 4